## Europäisches Patentamt
## European Patent Office
## Office européen des brevets

(19)

(11) Numéro de publication: **0 120 742 B1**

(12) **FASCICULE DE BREVET EUROPEEN**

(45) Date de publication du fascicule du brevet:
06.08.86

(51) Int. Cl.⁴: **H 04 N 7/16, H 04 N 7/173**

(21) Numéro de dépôt: **84400369.9**

(22) Date de dépôt: **23.02.84**

(54) Réseau câble de vidéocommunication.

(30) Priorité: **23.03.83 FR 8304752**

(43) Date de publication de la demande:
**03.10.84 Bulletin 84/40**

(45) Mention de la délivrance du brevet:
**06.08.86 Bulletin 86/32**

(84) Etats contractants désignés:
**BE DE FR GB IT NL**

(56) Documents cités:
**FR - A - 2 108 210
US - A - 3 751 670**

**PROCEEDINGS 1982 INTERNATIONAL SYMPOSIUM
ON SUBSCRIBER LOOPS AND SERVICES, 20-24
septembre 1982, Toronto, CA, pages 230-235; J.R. FOX:
"Initial experience with the Milton Keynes optical fibre
cable TV trial"**

(73) Titulaire: **SOCIETE ANONYME DE
TELECOMMUNICATIONS, 41, rue Cantagrel,
F-75624 Paris Cedex 13 (FR)**

(72) Inventeur: **Boutmy, Patrick, 41, rue Cantagrel,
F-75624 Paris Cedex 13 (FR)**

(74) Mandataire: **Martinet & Lapoux, 62, rue des Mathurins,
F-75008 Paris (FR)**

# Description

La présente invention a trait, d'une manière générale, à la vidéocommunication, et plus particulièrement à la télédistribution de canaux de télévision vers des terminaux de télévision d'abonné à travers un réseau de vidéocommunication.

Plus précisément, l'invention concerne un réseau de vidéocommunication comprenant au moins une station de distribution incluant des sélecteurs individuels de canaux recevant chacun M canaux de télévision à partir d'une ligne de distribution à large bande, et N terminaux de télévision d'abonné reliés chacun à la station de distribution à travers une ligne de raccordement à large bande bidirectionnelle incluant une voie d'aller transmettant l'un des canaux de télévision en bande de base de la station vers le terminal et une voie de retour transmettant un signal d'adresse de canal du terminal vers la station.

Dans les réseaux câblés de vidéocommunication connus de ce type, il est attribué à chaque abonné un sélecteur individuel des canaux de télévision. Le nombre M de canaux est nettement plus petit que le nombre N de terminaux d'abonné. Dans la station de distribution qui ne comprend que des circuits analogiques de transmission, chaque sélecteur est introduit entre l'une des sorties de l'amplificateur de distribution et l'entrée de la voie d'aller de la ligne de raccordement de l'abonné.

La sélection du canal de télévision que désire recevoir l'abonné sur un récepteur de télévision est télécommandée par un signal d'adresse convoyé par la voie de retour de la ligne de raccordement.

Ainsi, chaque sélecteur est programmable à distance afin de ne retransmettre que le canal désiré parmi tous les canaux délivrés par l'amplificateur de distribution. Il apparaît que le coût de raccordement d'un terminal d'abonné à la station de distribution est fonction principalement du coût du sélecteur programmable de canaux qui est relativement élevé.

La présente invention a pour but de réduire considérablement le nombre de sélecteurs individuels de canaux de télévision et donc le coût de raccordement d'un abonné au réseau de vidéocommunication. Corollairement, la maintenance du réseau est améliorée.

A cette fin, l'invention a pour objet un réseau de vidéocommunication tel que défini dans la revendication 1.

Le réseau selon l'invention est aussi un réseau mixte, analogique et numérique. Les moyens vidéo de commutation sont réalisés par un ensemble de grilles ou matrices vidéo de communication qui sont numériques afin d'éviter notamment tout problème de diaphonie entre les différentes voies à commuter.

Selon un autre aspect de l'invention, des ensembles comprenant chacun un sélecteur de canal et un moyen vidéo de codage associés à un canal de télévision sont sécurisés afin que les terminaux d'abonné puissent recevoir tous les canaux vidéo, même lorsque l'un des sélecteurs et/ou l'un des moyens vidéo de codage est défaillant. Dans ce cas, la station de distribution comprend un sélecteur de secours programmable recevant les M canaux de télévision à partir de la ligne de distribution, des moyens de secours vidéo de codage pour convertir un canal vidéo sélectionné par le sélecteur de secours en un signal numérique, et des moyens pour sélectivement substituer le sélecteur de secours et les moyens de secours vidéo de codage à un ensemble défaillant comprenant l'un desdits M sélecteurs et l'un desdits M moyens vidéo de codage associés à l'un des canaux de télévision.

D'autres caractéristiques et avantages de la présente invention apparaîtront plus clairement à la lecture de la description suivante en référence aux dessins annexés dans lesquels:

– la Fig. 1 est un bloc-diagramme d'un réseau câblé de vidéocommunication connu, et
– les Fig. 2A et 2B sont un bloc-diagramme d'un réseau câblé de vidéocommunication selon l'invention.

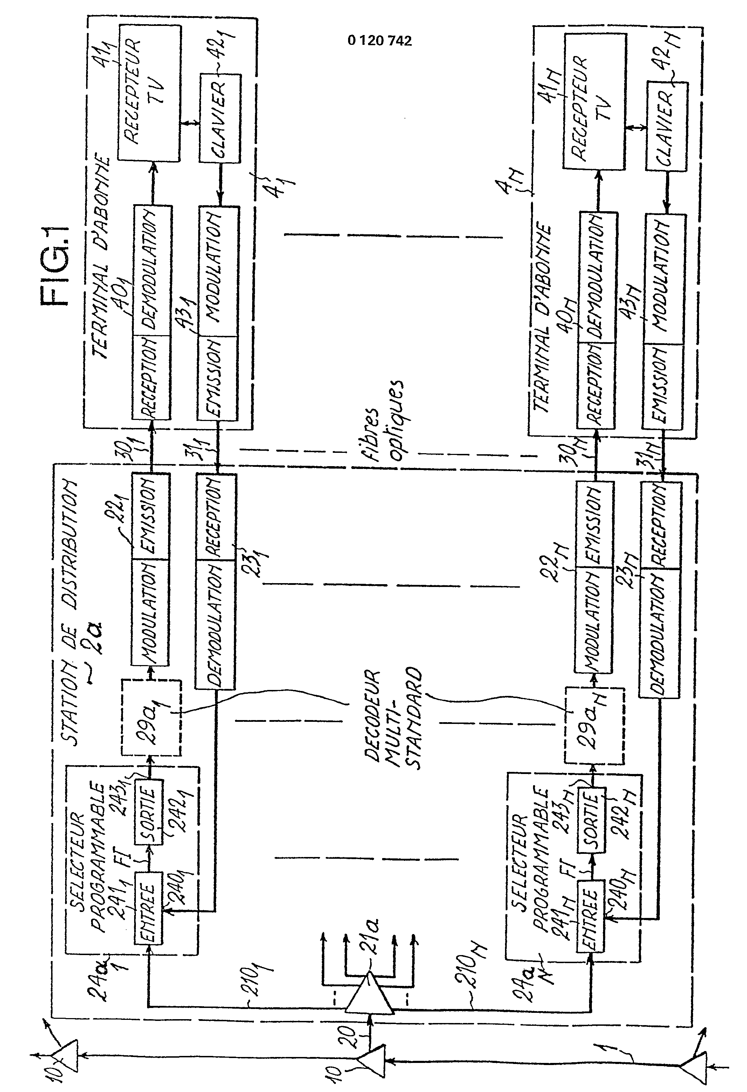

Afin de mieux montrer les avantages de la présente invention, on rappelle brièvement la structure schématique d'un réseau câblé de vidéocommunication connu en référence à la Fig. 1.

Le réseau comprend une ligne de transfert à large bande 1 qui convoie des canaux de télévision délivrés par une station de tête. On supposera dans la suite que le réseau est du type I et est destiné à desservir un nombre élevé N de terminaux de télévision en couleurs d'abonné, par exemple égal à 1000, et que la capacité du réseau en nombre M de programmes est également très élevée, typiquement de 30 canaux de télévision. La ligne de transfert 1 étant longue et le nombre de canaux de télévision étant élevé, il est nécessaire de transmettre les canaux de télévision en ondes métriques. Le plan de fréquences est par exemple prévu avec une largeur de bande de fréquences de 100 à 450 MHz dans laquelle un pas de 10 MHz est attribué à chacun des M canaux.

La ligne de transfert 1 est jalonnée d'amplificateurs de dérivation 10 qui sont espacés d'une distance de 0,5 à 1 km. Chaque amplificateur de dérivation 10 amplifie les signaux analogiques de télévision destinés à une dérivation respective sous la forme d'une ligne à large bande dite de distribution 20. Dans une station de distribution $2a$, chaque ligne de distribution 20 dessert un ou plusieurs amplificateurs de distribution $21a$ qui amplifient et distribuent l'ensemble des M canaux de télévision vers N lignes de raccordement d'abonné à large bande bidirectionnelles $30_1$-$31_1$ à $30_N$-$31_N$.

Le réseau de vidéocommunication est entièrement analogique. En général, la ligne de transfert 1 et les lignes de distribution telles que la ligne 20 sont constituées par des câbles coaxiaux. Les lignes de raccordement $30_1$-$31_1$ à $30_N$-$31_N$ sont constituées chacune par une première voie dite d'aller $30_1$ à $30_N$ et une seconde voie dite de retour $31_1$ à $31_N$ sous la forme de deux fibres optiques. Les lignes de raccordement ainsi que les organes reliés aux extrémités des lignes de raccordement étant respectivement identiques, on ne décrira en détail que les organes reliés à la ligne de raccordement $30_1$-$31_1$.

Du côté du local de l'abonné, la ligne de raccordement $30_1$-$31_1$ est reliée à un terminal de télévision d'abonné $4_1$. Dans le terminal $4_1$, un circuit de réception optique et de démodulation classique $40_1$ reçoit le signal vidéo d'un canal sélectionné à travers la voie d'aller $30_1$ et le retransmet en bande de base à la prise d'usager ou dite également de péritélévision d'un récepteur de télévision $41_1$. Le terminal $4_1$ comprend également un clavier $42_1$ dont la sortie délivre des signaux de signalisation tels qu'un signal numérique d'adresse de canal vers la voie de retour $31_1$ à travers un circuit de modulation et d'émission optique classique $43_1$. Le clavier $42_1$ permet à l'abonné de sélectionner un canal de télévision dont l'adresse est transmise vers la station de distribution 2a à travers la voie de retour $31_1$ et dont le signal vidé est retransmis à travers la voie d'aller $30_1$ en vue de visualiser le programme de télévision correspondant sur l'écran du récepteur $41_1$.

Dans la station de distribution 2a, l'autre extrémité de la ligne de raccordement d'abonné $30_1$-$31_1$ est équipée d'un circuit de modulation et d'émission optique $22_1$ ayant une sortie reliée à la voie d'aller $30_1$, et d'un circuit de réception optique et de démodulation $23_1$ ayant une entrée reliée à la voie de retour $31_1$.

Dans la station de distribution connue 2a, à chaque ligne de raccordement $30_1$-$31_1$ à $30_N$-$31_N$ est assigné un sélecteur programmable individuel de canaux $24a_1$ à $24a_N$. Chaque sélecteur $24a_1$ à $24a_N$ reçoit l'ensemble de M canaux de télévision délivré par l'une des N sorties à large bande $210_1$ à $210_N$ de l'amplificateur de distribution 21a.

Chaque sélecteur de canaux tel que le sélecteur $24_1$ a deux fonctions.

La première fonction consiste à sélectionner l'un des M canaux de télévision qui est adressé à distance par l'abonné au moyen du clavier $42_1$ par l'intermédiaire d'un signal d'adresse appliqué à une entrée de commande $240_1$ reliée à la sortie du circuit $23_1$ dans la voie de retour $31_1$. La sélection de la fréquence du canal désiré est effectuée dans des étages d'entrée à large bande $241_1$ du sélecteur $24_1$ qui comprennent un oscillateur commandé en tension (V.C.O.) asservi par une boucle de verrouillage de phase (P.L.L.) dans laquelle est inséré un diviseur de fréquence qui est programmable en fonction du signal d'adresse appliqué à l'entrée $240_1$. La sortie des étages d'entrée $241_1$ délivre le canal de télévision sélectionné à une fréquence intermédiaire FI prédéterminée, typiquement de l'ordre de 35 MHz. Cette fréquence intermédiaire est la même en sortie de tous les étages d'entrée $241_1$ à $241_N$ des sélecteurs $24_1$ à $24_N$, quels que soient les canaux respectifs sélectionnés par les abonnés.

La seconde fonction du sélecteur $24_1$ consiste en une transposition de la fréquence intermédiaire FI en la bande de base proprement dite du signal vidéo. Elle est effectuée dans les étages de sortie $242_1$ du sélecteur $24_1$ qui comprennent également une boucle à verrouillage de phase asservissant un oscillateur commandé en tension, stabilisé par quartz. La sortie $243_1$ des étages de sortie $242_1$ délivre le signal vidéo en bande de base du canal de télévision sélectionné à l'entrée du circuit de modulation et d'émission optique $22_1$ affecté à la voie d'aller $30_1$.

Comme déjà dit, l'inconvénient majeur du réseau câblé de vidéocommunication montré à la Fig. 1 est le nombre élevé de sélecteurs de canaux $24a_1$ à $24a_N$ qui est égal au nombre N = 1000 d'abonnés. Ainsi, l'attribution d'un sélecteur à chaque terminal d'abonné à raccorder augmente considérablement le prix de raccordement par abonné.

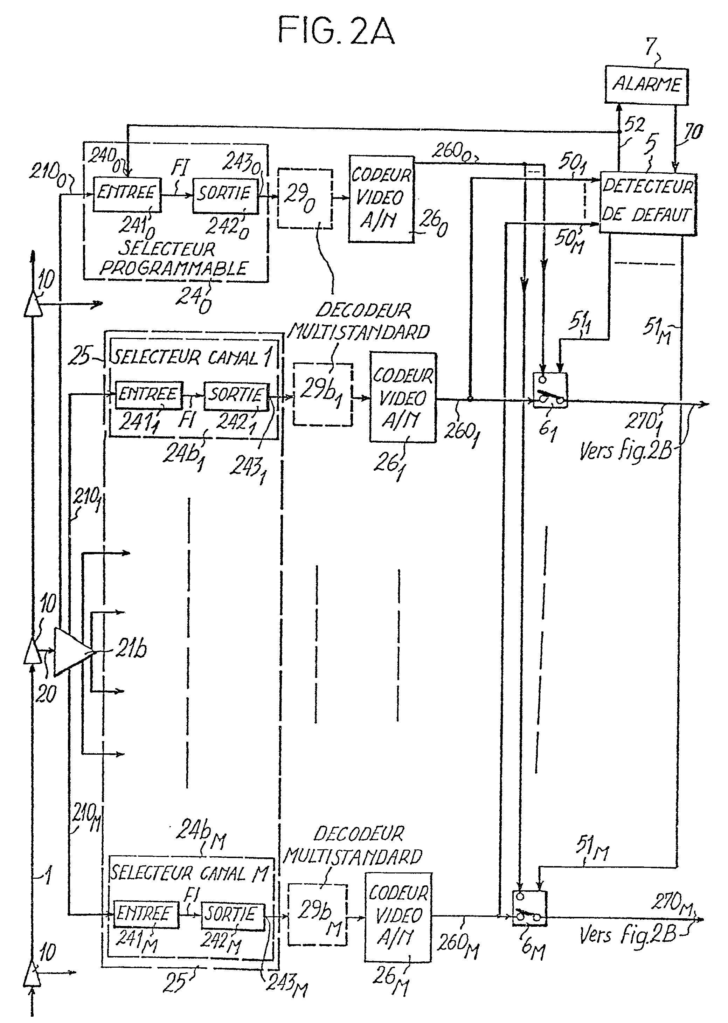

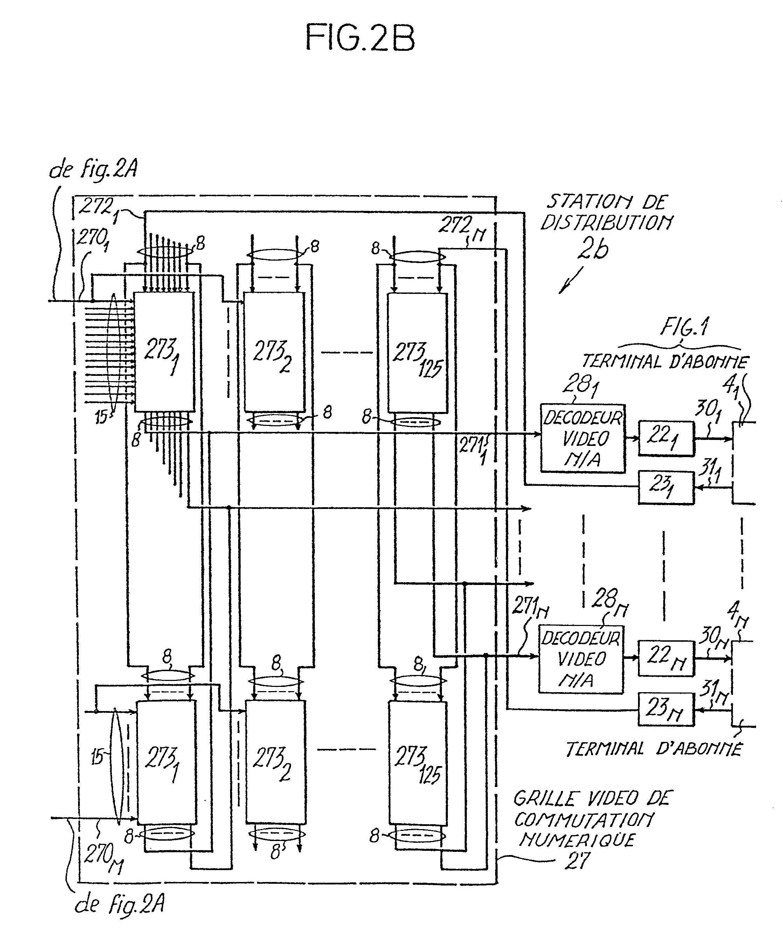

Le réseau câblé de vidéocommunication selon l'invention est maintenant décrit en référence aux Fig. 2A et 2B. Le réseau comprend, comme pour le réseau connu montré à la Fig. 1, une ligne à large bande de transfert 1 équipée d'amplificateurs de dérivation 10 et des stations de distribution dont une seule 2b est montrée en détail aux Fig. 2A et 2B. La station de distribution 2b est complètement différente de la station 2a décrite précédemment. La station 2b dessert des terminaux d'abonné $4_1$ à $4_N$ par l'intermédiaire de N lignes de raccordement d'abonné bidirectionnelles $30_1$-$31_1$ à $30_N$-$31_N$. Chaque ligne de raccordement est composée, comme en référence à la Fig. 1, d'une voie optique d'aller $30_1$ à $30_N$ et d'une voie optique de retour $31_1$ à $31_N$. Les extrémités de la voie d'aller et de la voie de retour dans la station de distribution 2b sont munies respectivement d'un circuit de modulation et d'émission optique $22_1$ à $22_N$ et d'un circuit de réception optique et de démodulation $23_1$ à $23_N$. Les extrémités de la voie d'aller et de la voie de retour dans le terminal d'abonné $4_1$ à $4_N$ sont munies respectivement d'un circuit de réception optique et de démodulation $40_1$ à $40_N$ et d'un circuit de modulation et d'émission optique $43_1$ à $43_N$.

La station de distribution 2b comprend un amplificateur de distribution à large bande 21b qui reçoit l'ensemble des M canaux de télévision dans la ligne de distribution 20. L'amplificateur 21b amplifie l'ensemble des M canaux et le répète sur M entrées $210_1$ à $210_M$ d'un circuit de séparation et de filtrage des canaux 25. Le circuit 25 comprend pour chacune de ses entrées un sélecteur individuel d'un canal respectif $24b_1$ à $24b_M$. Chaque sélecteur $24b_1$ à $24b_M$ est sensiblement analogue au sélecteur $24a_1$ à $24a_N$ décrit en référence à la Fig. 1, mais a des étages d'entrée $241_1$ à $241_M$ accordés sur le fréquence du canal respectif. Le sélecteur $24b_1$ à $24b_M$ est donc non programmable, plus simple et moins onéreux qu'un sélecteur $24a_1$ à $24a_N$.

Les sorties $243_1$ à $243_M$ des sélecteurs $24b_1$ à $24b_M$ délivrent respectivement les M canaux de télévision en bande de base à des codeurs vidéo analogiques-numériques $26_1$ à $26_M$. Chaque codeur vidéo analogique-numérique convertit le signal de télévision du canal respectif en un signal numérique à 140 Mbit/s. De préférence, le codeur $26_1$ à $26_M$ est un codeur connu à modulation différentielle du type delta-sigma ($\Delta\Sigma$). Le signal nu-

mérique délivré par le codeur est un train d'impulsions en densité proportionnellement à la valeur instantanée de l'amplitude du signal de télévision. Un tel codeur est décrit dans l'article de P. FRITZ, P. BOUTMY et G. LE FORT intitulé «Transmission de signaux de télévision codés sur paire coaxiale pour systèmes numériques à grande vitesse» paru dans l'Onde Electrique, vol. 51, février 1971, Paris (FR), et dans l'article de E. ROZA intitulé «AN OPTICAL 1-BITS VIDEO LINK» paru dans Conférence Européenne sur les communications optiques, 1981, Copenhague (DN), pages 14.4-1 à 14.4-4.

Les M signaux numériques de télévision sortant des codeurs $26_a$ à $26_M$ sont appliqués à M entrées $270_1$ à $270_M$ d'une grille ou matrice vidéo de commutation numérique 27. Comme montré à la Fig. 2B, la grille 27 possède N sorties $271_1$ à $271_N$ qui sont respectivement reliées à des décodeurs vidéo numériques-analogiques $28_1$ à $28_N$. La grille 27 reçoit par N entrées de commande $272_1$ à $272_N$ les signaux d'adresse de canal délivrés par les sorties des circuits de réception optique et de démodulation $23_1$ à $23_N$. En réponse à l'adresse de canal composée au clavier $42_1$ à $42_N$ et transmise sur la voie de retour respective $31_1$ à $31_N$, la grille 27 sélectionne le canal de télévision adressé à l'une des M entrées $270_1$ à $270_M$ et connecte l'entrée sélectionnée à la sortie respective $271_1$ à $271_N$ qui est reliée, via un décodeur respectif $28_1$ à $28_N$ et le circuit respectif $22_1$ à $22_N$, à la voie d'aller $30_1$ à $30_N$ de la ligne de raccordement incluant ladite voie de retour $31_1$ à $31_N$. Les décodeurs $28_1$ à $28_N$ convertissent les signaux numériques de télévision fournis par les sorties $271_1$ à $271_N$ de la grille 27 en les signaux analogiques de télévision en bande de base. Chaque décodeur est constitué uniquement par un filtre passe-bas lorsque le codeur $26_1$ à $26_M$ est du type delta-sigma.

En pratique, la grille vidéo de commutation numérique 27 peut être composée de plusieurs sous-grilles de commutation par exemple du type à seize entrées et huit sorties, fabriquées par LA RADIOTECHNIQUE COMPELEC (R.T.C.) sous la référence HXA 231101. Si M est égal à 30 et N est égal à 1000, la grille de commutation 27 comprend deux ensembles composés chacun de 125 sous-grilles $273_1$ à $273_{125}$. Quinze entrées de chacune des sous-grilles d'un premier ensemble sont reliées respectivement à quinze entrées telles que les entrées $270_1$ à $270_{15}$ et quinze entrées de chacune des sous-grilles d'un second ensemble sont reliées respectivement aux quinze autres entrées de la grille 27 telles que les entrées $270_{16}$ à $270_{30}$. Les sorties de chaque paire de sous-grille dans les deux ensembles sont reliées deux à deux à huit sorties respectives de la grille 27. Par exemple, les huit sorties des deux premières sous-grilles $273_1$ sont reliées respectivement aux sorties $271_1$ à $271_8$, et les huit sorties des deux dernières sous-grilles $273_{125}$ sont reliées respectivement aux sorties $271_{993}$ à $271_{1000}$, comme montré à la Fig. 2B. Toujours selon cet exemple, les huit entrées de commande des deux premières sous-grilles $273_1$ sont reliées respectivement aux entrées de commande $272_1$ à $272_8$ de la grille 27, et les huit entrées de commande des deux dernières sous-grilles $273_{125}$ sont reliées respectivement aux entrées de commande $272_{993}$ à $272_{1000}$ de la grille 27.

Ainsi, selon l'invention, chaque abonné ne sélectionne pas un signal analogique de télévision parmi M dans un sélecteur individuel d'abonné, mais sélectionne un signal numérique de télévision correspondant parmi M dans une grille vidéo de commutation numérique accessible à tous les abonnés.

Comparativement au réseau connu selon la Fig. 1, le réseau selon l'invention emploie M sélecteurs non programmables $24b_1$ à $24b_M$ au lieu de N sélecteurs programmables $24a_1$ à $24a_N$. Pour M = 30 et N = 1000, la réduction du nombre de sélecteurs selon l'invention se traduit par une réduction du coût de 1000/30, soit 97%. En tenant compte du coût relativement faible des codeurs $26_1$ à $26_M$, des décodeurs $28_1$ à $28_N$ et des 125 paires de sous-grilles de commutation $273_1$ à $273_{125}$, l'invention apporte une réduction du coût global de l'ordre de 50%. En outre, l'encombrement de l'ensemble des éléments contenus dans la station de distribution 2b selon l'invention est pratiquement égal à 30% de celui de la station de distribution connue 2a. Par ailleurs, le nombre de sélecteurs $24b_1$ à $24b_M$ étant faible, la maintenance globale du réseau de vidéocommunication est réduite. La fabrication de chaque sélecteur peut être optimisée puisque chaque sélecteur $24b_1$ à $24b_M$ est affecté à un canal de télévision prédéterminé.

La station de distribution 2b présente encore un autre avantage du point de vue du coût lorsque la station doit être introduite dans un réseau de vidéocommunication distribuant des canaux de télévision selon un standard qui est différent de celui des récepteurs de télévision $41_1$ à $41_N$. La compatibilité entre les standards de télévision est assurée en introduisant M décodeurs multistandards de télévision $29b_1$ à $29b_N$ respectivement entre les sorties $243_1$ à $243_M$ des sélecteurs de canaux $24b_1$ à $24b_M$ et les entrées des codeurs vidéo $26_1$ à $26_M$. Selon la technique antérieure en référence à la Fig. 1, N décodeurs multistandards de télévision $29a_1$ à $29a_N$ doivent être respectivement introduits entre les sorties des sélecteurs $24a_1$ à $24a_N$ et les entrées des circuits de modulation et d'émission optique $22_1$ à $22_N$.

De préférence, la station de distribution 2b comprend des moyens pour sécuriser des ensembles d'entrée incluant chacun un sélecteur de canal $24b_1$ à $24b_M$ et un codeur vidéo analogique-numérique $26_1$ à $26_M$ afin de substituer à un ensemble d'entrée défaillant un ensemble de secours incluant un sélecteur programmable de canal $24_o$ et un codeur vidéo analogique-numérique $26_o$.

Comme montré à la Fig. 2A, les sorties $260_1$ à $260_M$ des codeurs $26_1$ à $26_M$ sont reliées respectivement à des entrées $50_1$ à $50_M$ d'un détecteur de défaut 5 et sont normalement reliées aux entrées $270_1$ à $270_M$ de la grille de commutation 27 à travers des commutateurs $6_1$ à $6_M$. Les changements d'état des commutateurs $6_1$ à $6_M$ sont commandés par le détecteur de défaut 5 via des fils de com-

mande $51_1$ à $51_M$ respectivement. Les défauts détectés par le détecteur 5 dans les signaux numériques aux sorties $260_1$ à $260_M$ peuvent être par exemple une perte de rythme, un taux d'erreurs supérieur à une valeur prédéterminée, une perte de synchronisation de ligne vidéo, et une absence du signal numérique suite à un fonctionnement défectueux d'un composant inclus dans un sélecteur ou un codeur, ou à une défaillance de l'alimentation d'un sélecteur ou d'un codeur.

Lorsque le détecteur 5 détecte l'un des défauts précédents, le détecteur 5 transmet un signal d'alarme et d'adresse de canal vers un dispositif d'alarme 7 et vers une entrée de commande $240_0$ du sélecteur de secours programmable $24_0$, via une liaison 52. Le dispositif d'alarme 7 comprend, d'une manière connue, des moyens d'alarme audio et/ou visuels pour avertir un opérateur dans la station de distribution 2b que l'un des sélecteurs $24b_1$ à $24b_M$ et/ou l'un des codeurs $26_1$ à $26_M$ est défaillant. De préférence, le dispositif d'alarme 7 affiche le numéro du canal 1 à M correspondant au circuit défaillant, la liaison 52 véhiculant l'adresse dudit canal correspondant.

Le sélecteur programmable $24_0$ est analogue à l'un des sélecteurs programmables $24a_1$ à $24a_N$ déjà décrits en référence à la Fig. 1. L'entrée $210_0$ des étages d'entrée $241_0$ du sélecteur $24_0$ reçoit l'ensemble des M canaux de télévision via l'amplificateur de distribution 21b. Les étages d'entrée $241_0$ sélectionnent le canal correspondant au signal d'adresse transmis par la liaison 52 de sorte que la sortie $243_0$ des étages de sortie $242_0$ du sélecteur $24_0$ transmet au codeur $26_0$ le signal vidéo en bande de base que transmet normalement le sélecteur $24b_1$ à $24b_M$ inclus dans l'ensemble défaillant. Un décodeur multistandard $29_0$ peut être prévu entre la sortie du sélecteur $24_0$ et l'entrée du codeur $26_0$.

Simultanément à la transmission d'un signal d'adresse dans la liaison 52, le détecteur de défaut 5 commande le commutateur $6_1$ à $6_M$ relié à la sortie du codeur $26_1$ à $26_M$ inclus dans l'ensemble défaillant, afin que le commutateur $6_1$ à $6_M$ relie la sortie $260_0$ du codeur de secours $26_0$ à l'entrée correspondante $270_1$ à $270_M$ de la grille de commutation 27. L'ensemble $24_0$-$26_0$ est ainsi substitué à l'ensemble défaillant $24b_1$-$26_1$ à $24b_M$-$26_M$. Dans ces conditions, aucun abonné n'est privé de la réception du canal vidéo 1 à M sélectionné normalement par l'ensemble défaillant. Après réparation de l'ensemble défaillant, l'opérateur inhibe la liaison de l'ensemble de secours $24_0$-$26_0$ à la grille de commutation 27 grâce à une liaison de commande 70 entre le dispositif d'alarme 7 et le détecteur de défaut 5.

Bien que la description précédente se soit référée à des signaux vidéo, le terme «vidéo» doit être compris dans un sens large. En d'autres termes, le réseau est utilisé pour télédistribuer des signaux de vision comprenant chacun un signal vidéo composite et un signal de son, ou pour télédistribuer séparément un signal vidéo composite, ou un signal de son tel qu'un signal audio de haute fidélité à modulation de fréquence.

Les voies d'aller $30_1$ à $30_N$ et les voies de retour $31_1$ à $31_N$ peuvent également convoyer d'autres signaux destinés à d'autres types de terminaux d'abonné, et en particulier à des terminaux relevant du domaine de la télématique interactive et des transmissions bidirectionnelles de signaux de services, tels que télétex et vidéotex.

## Revendications

1. Réseau de vidéocommunication comprenant une station de distribution (2b) incluant des sélecteurs individuels de canaux (24b) recevant chacun M canaux de télévision à partir d'une ligne de distribution à large bande (20) et N terminaux de télévision d'abonné ($4_1$ à $4_N$) reliés chacun à la station de distribution (2b) à travers un moyen de transmission à large bande bidirectionnel incluant une première voie ($30_1$ à $30_N$) transmettant l'un des canaux de télévision en bande de base de la station vers le terminal et une seconde voie ($31_1$ à $31_N$) transmettant un signal d'adresse de canal du terminal vers la station, caractérisé en ce que le nombre de sélecteurs individuels de canaux ($24b_1$ à $24b_M$) est égal au nombre M de canaux de télévision, en ce que chaque sélecteur ($24b_1$ à $24b_M$) sélectionne en permanence un canal respectif de télévision et en ce que la station de distribution (2b) comprend M moyens vidéo de codage ($26_1$ à $26_M$) pour convertir respectivement les canaux sélectionnés par les sélecteurs ($24b_1$ à $24b_M$) en M signaux numériques ($260_1$ à $260_M$), des moyens vidéo numériques de commutation (27) commandés par les signaux d'adresse de canal ($272_1$ à $272_N$) dans les N secondes voies ($31_1$ à $31_N$) et comprenant M entrées ($270_1$ à $270_M$) recevant respectivement lesdits M signaux numériques ($260_1$ à $260_M$) et N sorties ($271_1$ à $271_N$) respectivement associées aux N premières voies ($30_1$ à $30_N$) pour relier sélectivement chaque sortie ($271_1$ à $271_N$) à l'une des entrées ($270_1$ à $270_M$), ladite entrée étant adressée par le signal d'adresse de canal dans la seconde voie ($31_1$ à $31_N$) du moyen de transmission incluant la première voie ($30_1$ à $30_N$) associée à ladite sortie ($271_1$ à $271_N$), et N moyens vidéo du décodage ($28_1$ à $28_N$) pour convertir les signaux numériques délivrés par les sorties ($271_1$ à $271_N$) des moyens de commutation (27) en les canaux de télévision correspondants convoyés par les N premières voies ($30_1$ à $30_N$).

2. Réseau conforme à la revendication 1, caractérisé en ce que les moyens de commutation (27) comprennent plusieurs sous-grilles vidéo numériques de commutation ($273_1$ à $273_{125}$).

3. Réseau conforme à la revendication 1 ou 2, caractérisé en ce que les moyens de codage ($26_1$ à $26_M$) sont des codeurs à modulation différentielle et en ce que les moyens de décodage ($28_1$ à $28_M$) sont des décodeurs à modulation différentielle.

4. Réseau conforme à la revendication 3, caractérisé en ce que les modulations et démodulations différentielles sont du type delta-sigma.

5. Réseau conforme à l'une quelconque des revendications 1 à 4, caractérisé en ce que la station de distribution (2b) comprend un sélecteur de secours programmable (24₀) recevant les M canaux de télévision à partir de la ligne de distribution (20), des moyens de secours vidéo de codage (26₀) pour convertir un canal de télévision sélectionné par le sélecteur de secours (24₀) en un signal numérique (260₀), et des moyens (5, 6₁ à 6ₘ) pour substituer sélectivement le sélecteur de secours (24₀) et les moyens de secours vidéo de codage à un ensemble défaillant comprenant l'un desdits M sélecteurs (24b₁ à 24bₘ) et l'un desdits M moyens vidéo de codage (26₁ à 26ₘ) associés à l'un des canaux de télévision.

6. Réseau conforme à la revendication 5, caractérisé en ce que les moyens pour substituer comprennent des moyens (5) pour détecter des défauts dans lesdits M signaux numériques aux sorties (260₁ à 260ₘ) desdits M moyens vidéo de codage (26₁ à 26ₘ), et M commutateurs (6₁ à 6ₘ) pour relier sélectivement chacun l'un desdits M moyens vidéo de codage (26₁ à 26ₘ) et lesdits moyens de secours vidéo de codage (26₀) à l'une des entrées (270₁ à 270ₘ) des moyens de commutation (27), la détection d'un défaut dans l'un desdits M signaux numériques provoquant la sélection du canal vidéo respectif dans ledit sélecteur programmable (24₀) et la liaison des moyens de secours vidéo de codage (26₀) à l'entrée respective (270₁ à 270ₘ) des moyens de commutation (27) via le commutateur respectif (6₁ à 6ₘ) sous la commande des moyens pour détecter des défauts (5).

7. Réseau conforme à l'une des revendications 1 à 6, caractérisé en ce que la station de distribution (2b) comprend des décodeurs vidéo multistandards (29₀, 29b₁ à 29bₘ) interconnectés respectivement entre les sélecteurs (24₀, 24b₁ à 24bₘ) et les moyens vidéo de codage (26₀, 26₁ à 26ₘ).

## Patentansprüche

1. Videokommunikationsnetzwerk mit einer Verteilerstation (2b), die individuelle Kanalwähler (24b) einschliesst, von denen jeder M Fernsehkanäle von einer Breitbandverteilerleitung (20) und N Fernsehempfangsstellen (4₁-4ₙ) aufweist, von denen jede mit der Verteilerstation (2b) über eine Zweiweg-Breitbandübertragungseinrichtung verbunden ist, die einen ersten Übertragungsweg (30₁-30ₙ), der einen der Fernsehkanäle im Basisband von der Verteilerstation zur Empfangsstelle überträgt, und einen zweiten Übertragungsweg (31₁-31ₙ), der ein Kanaladressensignal von der Empfangsstelle zur Verteilerstation überträgt, umfasst, dadurch gekennzeichnet, dass die Anzahl der individuellen Kanalwähler (24b₁-24bₘ) gleich der Anzahl M der Fernsehkanäle ist, dass jeder Kanalwähler (24b₁-24bₘ) dauernd einen betreffenden Fernsehkanal auswählt und dass die Verteilerstation (2b) M Videokodierstellen (26₁-26ₘ) aufweist, um die durch die Kanalwähler (24b₁-24bₘ) ausgewählten Fernsehkanäle entsprechend in M digitale Signale (260₁-260ₘ) umzuwandeln, wobei digitale Videoschaltstellen (27), die durch Kanaladressensignale (272₁-272ₙ) in den N zweiten Übertragungswegen (31₁-31ₙ) gesteuert sind, und M Eingänge (270₁-270ₘ), die entsprechend die M digitalen Signale (260₁-260ₘ) empfangen, und N Ausgänge (271₁-271ₙ), die entsprechend den N ersten Übertragungswegen (30₁-30ₙ) zugeordnet sind, aufweisen, wahlweise jeden Ausgang (271₁-271ₙ) mit einem der Eingänge (270₁-270ₘ) verbinden, und dieser Eingang durch das Kanaladressensignal im zweiten Übertragungsweg (31₁-31ₙ) der Übertragungseinrichtung, welche den dem Ausgang zugeordneten ersten Übertragungsweg (30₁-30ₙ) einschliesst, bezeichnet ist, und N Videodekodierstellen (28₁-28ₘ) vorgesehen sind, um die von den Ausgängen (271₁-271ₙ) der Videoschaltstellen (27) in die entsprechenden und von den N ersten Übertragungswegen (30₁-30ₙ) begleiteten Fernsehkanäle gelieferten digitalen Signale umzuwandeln.

2. Netzwerk nach Anspruch 1, dadurch gekennzeichnet, dass die Videoschaltstellen (27) mehrere digitale Videoschaltuntergitter (273₁-273₁₂₅) aufweisen.

3. Netzwerk nach Anspruch 1 oder 2, dadurch gekennzeichnet, dass die Videokodierstellen (26₁-26ₘ) Kodierstufen für eine differentielle Modulation sind, und dass die Videodekodierstellen (28₁-28ₘ) Dekodierstufen für differentielle Demodulation sind.

4. Netzwerk nach Anspruch 3, dadurch gekennzeichnet, dass die differentiellen Modulationen und Demodulationen vom Typ Delta-Sigma sind.

5. Netzwerk nach einem der Ansprüche 1 bis 4, dadurch gekennzeichnet, dass die Verteilerstation (2b) umfasst einen programmierbaren Hilfswähler (24₀), der die von der Verteilerleitung (20) ausgehenden M Fernsehkanäle empfängt, Hilfsvideokodierstellen (26₀), um einen vom Hilfswähler (24₀) ausgewählten Fernsehkanal in ein digitales Signal (260₀) umzuwandeln, und Einrichtungen (5, 6₁-6ₘ) zum wahlweisen Einsetzen des Hilfswählers (24₀) und der Hilfsvideokodierstellen an einer fehlerhaften Einheit, die einen der M Kanalwähler (24b₁-24bₘ) und eine der M Videokodierstellen (26₁-26ₘ), die einem der Fernsehkanäle zugeordnet sind, aufweist.

6. Netzwerk nach Anspruch 5, dadurch gekennzeichnet, dass die Ersatzeinrichtungen eine Einrichtung (5) zum Feststellen von Fehlern in den M digitalen Signalen an den Ausgängen (260₁-260ₘ) der M Videokodierstellen (26₁-26ₘ) und M Schalter (6₁-6ₘ) zum wahlweisen Verbinden einer jeden der M Videokodierstellen (26₁-26ₘ) und der Hilfsvideokodierstellen (26₀) mit einem der Eingänge (270₁-270ₘ) der Videoschaltstellen (27) aufweisen, wobei die Feststellung eines Fehlers in einem der M digitalen Signale die Auswahl des entsprechenden Videokanals in dem programmierbaren Wähler (24₀) und die Verbindung der Videohilfskodierstellen (26₀) mit dem entspre-

chenden Eingang ($270_1$-$270_M$) der Videoschaltstellen (27) über den entsprechenden Schalter ($6_1$-$6_M$) unter der Steuerung der Einrichtung zur Fehlerfeststellung bewirkt.

7. Netzwerk nach einem der Ansprüche 1 bis 6, dadurch gekennzeichnet, dass die Verteilerstation (2b) Multistandard-Videodekodierstellen ($29_0$, $29b_2$-$29b_M$) aufweist, die entsprechend zwischen die Kanalwähler ($24_0$, $24b_1$-$24b_M$) und die Videokodierstellen ($26_0$, $26_1$-$26_M$) geschaltet sind.

## Claims

1. Videocommunication network comprising a distribution station (2b) including individual channel selectors (24b) each receiving M television channels from a wideband distribution line (20), and N subscriber television terminals ($4_1$ to $4_N$) each connected to the distribution station (2b) via a bidirectional wideband transmission medium including a first path ($30_1$ to $30_N$) carrying one of said television channels in baseband from the station to the terminal and a second path ($31_1$ to $31_N$) carrying a channel address signal from the terminal to the station, characterized in that the number of individual channel selectors ($24b_1$ to $24b_M$) is equal to the number M of the television channels, in that each selector ($24b_1$ to $24b_M$) continuously selects a respective television channel and in that the distribution station (2b) comprises M video coding means ($26_1$ to $26_M$) for respectively converting the channels selected by the selectors ($24b_1$ to $24b_M$) into M digital signals ($260_1$ to $260_M$), digital video switching means (27) controlled by the channel address signals ($272_1$ to $272_N$) in the N second paths ($31_1$ to $31_N$) and comprising M inputs ($270_1$ to $270_M$) respectively receiving said M digital signals ($260_1$ to $260_M$) and N outputs ($271_1$ to $271_N$) respectively associated with the N first paths ($30_1$ to $30_N$) for selectively connecting each output ($271_1$ to $271_N$) to one of said inputs ($270_1$ to $270_M$), said input being addressed by the channel address signal in the second path ($31_1$ to $31_N$) of the transmission medium including the first path ($30_1$ to $30_N$) associated with said output ($271_1$ to $271_N$), and N video decoding means ($28_1$ to $28_N$) for converting the digital signals delivered by the outputs ($271_1$ to $271_N$) of the switching means (27) into the corresponding television channels carried by the N first paths ($30_1$ to $30_N$).

2. Network according to claim 1, characterized in that the switching means (27) comprise several digital video switching sub-matrices ($273_1$ to $273_{125}$).

3. Network according to claim 1 or 2, characterized in that the coding means ($26_1$ to $26_M$) are differential modulation coders and in that the decoding means ($28_1$ to $28_M$) are differential demodulation decoders.

4. Network according to claim 3, characterized in that the differential modulations and demodulations are of delta-sigma type.

5. Network according to any one of claims 1 to 4, characterized in that the distribution station (2b) comprises a programmable spare selector ($24_0$) receiving the M television channels from the distribution line (20), spare video coding means ($26_0$) for converting a television channel selected by the spare selector ($24_0$) into a digital signal (260), and means (5, $6_1$ to $6_M$) for selectively substituting the spare selector ($24_0$) and the spare video coding means for a faulty assembly comprising one of said M selectors ($24b_1$ to $24b_M$) and one of said M video coding means ($26_1$ to $26_M$) associated with one of the television channels.

6. Network according to claim 5, characterized in that the susbtituting means comprise means (5) for detecting faults in said M digital signals outputting ($260_1$ to $260_M$) from said M video coding means ($26_1$ to $26_M$), and M switching circuits ($6_1$ to $6_M$) each for selectively linking one of said M video coding means ($26_1$ to $26_M$) and said spare video coding means ($26_0$) to one of the inputs ($270_1$ to $270_M$) of the switching means (27), the detection of a fault in one of said M digital signals causing a selection of the respective video channel in said programmable spare selector ($24_0$) and the link-up of the spare video coding means ($26_0$) to the respective input ($270_1$ to $270_M$) of the switching means (27) via the respective switching circuit ($6_1$ to $6_M$) under the control of the fault detecting means (5).

7. Network according to claim 1, characterized in that said distribution station (2b) comprises multistandard video decoders ($29_0$, $29b_1$ to $29b_M$) respectively interconnected between the selectors ($24_0$, $24b_1$ to $24b_M$) and the video coding means ($26_0$, $26_1$ to $26_M$).

FIG.1

STATION DE DISTRIBUTION ~ 2a

SELECTEUR PROGRAMMABLE

ENTREE SORTIE

DECODEUR MULTI-STANDARD

MODULATION EMISSION

DEMODULATION RECEPTION

fibres optiques

TERMINAL D'ABONNE

RECEPTION DEMODULATION

RECEPTEUR TV

EMISSION MODULATION

CLAVIER

0 120 742

FIG. 2A

0 120 742

11

# FIG.2B

de fig.2A

STATION DE
DISTRIBUTION
2b

FIG.1
TERMINAL D'ABONNE

DECODEUR
VIDEO
N/A

TERMINAL D'ABONNE

GRILLE VIDEO DE
COMMUTATION
NUMERIQUE
27

de fig.2A